# EUROPÄISCHE PATENTANMELDUNG

(11) **EP 3 943 229 A1**
(43) Veröffentlichungstag der Anmeldung: **26.01.2022**
(21) Anmeldenummer: 20187115.9
(22) Anmeldetag: 22.07.2020
(51) Int. Cl.: B23K 9/10, B23K 9/32, H02J 50/10

(54) **KOMMUNIKATIONSMODUL FÜR EINE SCHWEISSSTROMQUELLE**

(71) Anmelder: FRONIUS INTERNATIONAL GmbH, 4643 Pettenbach (AT)
(72) Erfinder: POINTNER, Christian, 4643 Pettenbach (AT); ITZENBERGER, Daniel, 4643 Pettenbach (AT); FRIEDL, Helmut, 4643 Pettenbach (AT); GRAZIANI, Stefan, 4643 Pettenbach (AT); FUCHS, Carina, 4643 Pettenbach (AT)
(74) Vertreter: SONN Patentanwälte OG

(57) **Zusammenfassung**

Die Erfindung betrifft ein Kommunikationsmodul (1) für eine Schweißstromquelle (30) mit einer Verbindung (2) zur Schweißstromquelle (32) und einer Sende-/Empfangseinheit (3) zur drahtlosen Verbindung mit einer Schweißkomponente (4), wobei eine Vorrichtung (5) zur kontaktlosen Ladung eines wiederaufladbaren Energiespeichers (6) der Schweißkomponente (4) vorgesehen ist.

## Beschreibung

Die Erfindung betrifft ein Kommunikationsmodul für eine Schweißstromquelle mit einer Verbindung zur Schweißstromquelle und einer Sende-/Empfangseinheit zur drahtlosen Verbindung mit einer Schweißkomponente.

Bei Schweißsystemen ist es bekannt, verschiedenste Schweißkomponenten, wie Fernregler, Schweißhelme, Handschuhe, Fußtaster, Schuhe, Mobiltelefone, Uhren, Mikrophone, etc. mit einer Schweißstromquelle zu verbinden, um beispielsweise Einstellungen an der Schweißstromquelle bequemer, beispielsweise aus der Ferne vornehmen zu können. Üblicherweise werden die Schweißkomponenten über eine Leitung oder auch drahtlos mit der Schweißstromquelle verbunden, weshalb Stromquellen entsprechende Kommunikationsmöglichkeiten eingebaut haben.

Beispielsweise beschreibt die EP 0 895 826 A2 ein Schweißgerät mit einem vom Gehäuse abnehmbaren Bedienteil, welcher über ein Kabel mit der Schweißstromquelle verbunden ist, aber auch drahtlos mit dem Schweißgerät kommunizieren kann, wobei es eine eigenständige Stromversorgung aufweisen muss.

Die EP 1 112 800 B2 offenbart eine Vorrichtung zum Fernsteuern einer Schweißanlage mit einer drahtlosen Fernbedienung, welche mit Kommunikationsmodulen (auch bidirektional) kommuniziert. Die Kommunikationsmodule sind über Kabel mit der Schweißstromquelle oder anderen Komponenten verbunden. Die Fernbedienung kann Batterien aufweisen, die durch Auflademittel aufgeladen werden können, die sich an der Stromquelle oder anderswo befinden können.

Die US 9,180,544 B2 offenbart Schweißkomponenten, wie Fußschalter, Fernregler, etc., welche drahtlos mit einem mit der Schweißstromquelle über eine Steckverbindung verbundenen Empfänger kommunizieren.

Die EP 1 681 122 A1 offenbart ein System zur Fernbedienung und Fernabfrage einer Konstruktionseinrichtung, wie zum Beispiel einem Schweißgerät. Dabei ist das Schweißgerät über ein Kommunikationsmodul mit einer Kommunikationseinrichtung verbunden. Die Kommunikation kann über unterschiedlichste Technologien und Protokolle erfolgen, kabelgebunden oder drahtlos. Das Kommunikationsmodul kann Teil des Schweißgeräts oder separat dazu angeordnet sein.

Bisherige drahtlose Kommunikationssysteme weisen hinsichtlich der Kommunikation, Energieversorgung und Kosten Nachteile auf.

Die Aufgabe der vorliegenden Erfindung besteht daher in der Schaffung eines oben genannten Kommunikationsmoduls für eine Schweißstromquelle, welches eine verbesserte Kommunikation zwischen Schweißstromquelle und Schweißkomponenten ermöglicht und auch immer eine ausreichende Energieversorgung der Schweißkomponenten sicherstellt. Nachteile bekannter Vorrichtungen sollen vermieden oder zumindest reduziert werden.

Gelöst wird die erfindungsgemäße Aufgabe dadurch, dass eine Vorrichtung zur kontaktlosen Ladung eines wiederaufladbaren Energiespeichers der Schweißkomponente vorgesehen ist. Das gegenständliche Kommunikationsmodul ermöglicht daher durch die Verbindung mit der Schweißstromquelle eine optimale Anbindung an die Schweißstromquelle und über die integrierte Sende-/Empfangseinheit eine optimale drahtlose Verbindung zu den verschiedensten Schweißkomponenten, wie zum Beispiel einem Fernregler oder einem Schweißhelm. Darüber hinaus bietet die integrierte Vorrichtung die Möglichkeit einer kontaktlosen Ladung eines wiederaufladbaren Energiespeichers der jeweiligen Schweißkomponente, indem die jeweilige Schweißkomponente in die Nähe des mit der Schweißstromquelle verbindbaren Kommunikationsmoduls gebracht wird oder beispielsweise auf dieses aufgelegt wird. Beim wiederaufladbaren Energiespeicher der jeweiligen Schweißkomponente handelt es sich in der Regel um einen Akkumulator. Auch andere Arten von wiederaufladbaren Energiespeichern, wie zum Beispiel Kondensatoren, sind aber auch denkbar.

Vorteilhafterweise ist die Vorrichtung zur kontaktlosen Ladung des wiederaufladbaren Energiespeichers der Schweißkomponente durch eine induktive Ladevorrichtung gebildet. Dies stellt eine einfach implementierbare und geeignete kontaktlose Energieübertragung vom Kommunikationsmodul zum wiederaufladbaren Energiespeicher der Schweißkomponente dar. Beispielsweise kann die Ladung nach dem Qi-Standard des Wireless Power Consortiums (WPC) erfolgen.

Gemäß einem weiteren Merkmal der Erfindung ist ein mit der Vorrichtung zur kontaktlosen Ladung des wiederaufladbaren Energiespeichers der Schweißkomponente verbundener Energiespeicher vorgesehen. Durch einen solchen Energiespeicher, beispielsweise Akkumulator, im Kommunikationsmodul kann der Betrieb des Kommunikationsmoduls und die Ladung des wiederaufladbaren Energiespeichers einer Schweißkomponente auch dann sichergestellt werden, wenn das Kommunikationsmodul nicht mit der Schweißstromquelle verbunden ist oder das Kommunikationsmodul zwar mit der Schweißstromquelle verbunden ist, aber die Schweißstromquelle vom Versorgungsnetz getrennt ist.

Wenn im Kommunikationsmodul eine Aufnahme zur mechanischen Kopplung mit der Schweißkomponente vorgesehen ist, kann eine ordnungsgemäße Orientierung der jeweiligen Schweißkomponente am Kommunikationsmodul und somit ein ordnungsgemäßes Laden des wiederaufladbaren Energiespeichers der Schweißkomponente gewährleistet werden. Die Aufnahme kann beispielsweise als Art Ladeschale in Form der Schweißkomponente oder eines Teils der Schweißkomponente ausgebildet sein.

Bevorzugt weist die Aufnahme ein Verriegelungselement zur Verriegelung der Schweißkomponente im Kommunikationsmodul auf. Dadurch wird ein ungewolltes Entfernen der Schweißkomponente vom Kommunikationsmodul und somit ein ungewolltes Unterbrechen des Ladevorgangs verhindert oder zumindest erschwert. Das Verriegelungselement kann durch eine federbelastete Rastnase oder dgl. bis hin zu einem Riegel, der nur mit Hilfe eines Schlüssels betätigt werden kann, um Unbefugtes Entfernen der Schweißkomponente vom Kommunikationsmodul verhindern zu können, realisiert werden.

Wenn im Kommunikationsmodul eine Schnittstelle zur Verbindung mit der Schnittstelle eines weiteren Kommunikationsmoduls vorgesehen ist, können mehrere Kommunikationsmodule zusammengeschaltet werden. Dadurch können beispielsweise mehrere Energiespeichern mehrerer Kommunikationsmodule in Serie oder parallel zusammengeschaltet werden, um mehr Spannung und Leistung für das Laden der wiederaufladbaren Energiespeichern der Schweißkomponente erzielen zu können.

Zur Ermöglichung des Zusammenschaltens mehrerer Energiespeicher mehrerer Kommunikationsmodule sind die Schnittstellen des Kommunikationsmoduls bevorzugt mit dem Energiespeicher verbunden.

Alternativ oder zusätzlich zu einer oben genannten Schnittstelle kann auch eine Steckverbindung am Kommunikationsmodul angeordnet sein zur Verbindung mit einem externen Energiespeicher. Auf diese Weise kann die elektrische Energie, welche ein Kommunikationsmodul durch den integrierten Energiespeicher zur Verfügung stellt, erhöht werden.

Die Schweißkomponente kann beispielsweise durch einen Fernregler, einen Schweißhelm, ein Head-up-Display, eine Smartwatch, ein Smartphone, einen Fußfernsteller, einen Handschuh, ein Mikrophon, einen Schuh, einen Sensor, insbesondere smarten Sensor, und bzw. oder einen Aktor gebildet sein. Hier sind verschiedenste Schweißkomponenten denkbar, welche eine Bedienung, Überwachung oder Beeinflussung der Schweißvorrichtung bzw. des Schweißverfahrens ermöglichen oder erleichtern.

Die Verbindung des Kommunikationsmoduls zur Schweißstromquelle ist vorzugsweise durch eine Kabelverbindung, insbesondere eine Standard-Datenschnittstelle gebildet. Über eine Kabelverbindung kann die sichere Funktion des Kommunikationsmoduls und auch die sichere Ladung eines darin vorhandenen Energiespeichers sichergestellt werden. Bei der Standard-Datenschnittstelle kann es sich beispielsweise um eine USB (Universal Serial Bus)-Schnittstelle handeln. Bei einer kabelgebundenen Verbindung ist auch die Einhaltung entsprechender EMV (Elektromagnetische Verträglichkeit)-Richtlinien leicht möglich. Weitere kabelgebundene Verbindungsmöglichkeiten sind dem Fachmann bekannt.

Alternativ oder zusätzlich dazu kann die Verbindung des Kommunikationsmoduls zur Schweißstromquelle aber auch durch eine drahtlose Verbindung gebildet sein, wobei unterschiedliche Datenübertragungsmöglichkeiten zur Anwendung kommen können. Im Falle einer ausschließlich drahtlosen Verbindung zwischen dem Kommunikationsmodul und der Schweißstromquelle kann die Ladung des allfälligen Energiespeichers im Kommunikationsmodul auch mit einem externen Ladegerät, welches mit dem Versorgungsnetz verbunden werden kann, erfolgen.

Die Sende-/Empfangseinheit des Kommunikationsmoduls kann beispielsweise durch eine Bluetooth-Sende-/Empfangseinheit, eine NFC (Near Field Communication)-Sende-/Empfangseinheit, eine optische Sende-/Empfangseinheit, eine akustische Sende-/Empfangseinheit und bzw. oder eine Hochfrequenz-Sende-/Empfangseinheit gebildet sein. Die jeweilige Übertragungsart wird an die jeweiligen Bedingungen, insbesondere die gewünschte Reichweite und die notwendige Zuverlässigkeit der Datenverbindung angepasst.

Wenn im Kommunikationsmodul eine Anzeige vorgesehen ist, können bestimmte Informationen an den Benutzer ausgegeben werden. Je nach gewünschter Informationswiedergabe kann die Anzeige von einer oder mehreren Lichtquellen über ein Display bis hin zu einem Bildschirm gebildet sein.

Wenn am Kommunikationsmodul Bedienelemente vorgesehen sind, können verschiedene Einstellungen durch einen Benutzer vorgenommen werden. Auch hier reichen Realisierungen möglicher Bedienungselementen je nach gewünschter Einstellmöglichkeit von einfachen Schaltern oder Tastern bis hin zu Drehschaltern oder multifunktionalen Eingabepaneelen.

Die Anzeige und Bedienelemente im Kommunikationsmodul können auch in einem Touchscreen kombiniert werden.

Die vorliegende Erfindung wird anhand der beigefügten Zeichnungen näher erläutert. Darin zeigen:
- Fig. 1: ein Blockschaltbild eines mit einer Schweißstromquelle verbindbaren Kommunikationsmoduls zur Kommunikation mit verschiedenen Schweißkomponenten;
- Fig. 2: ein Blockschaltbild zweier miteinander verbundener Kommunikationsmodule;
- Fig. 3: ein Blockschaltbild einer weiteren Ausführungsform eines Kommunikationsmoduls für eine Schweißstromquelle;
- Fig. 4: eine schematische Ansicht auf eine Ausführungsform eines Kommunikationsmoduls für eine Schweißstromquelle;
- Fig. 5: eine schematische Ansicht auf eine weitere Ausführungsform eines Kommunikationsmoduls für eine Schweißstromquelle; und
- Fig. 6: ein Blockschaltbild eines Kommunikationsmoduls für eine Schweißstromquelle.

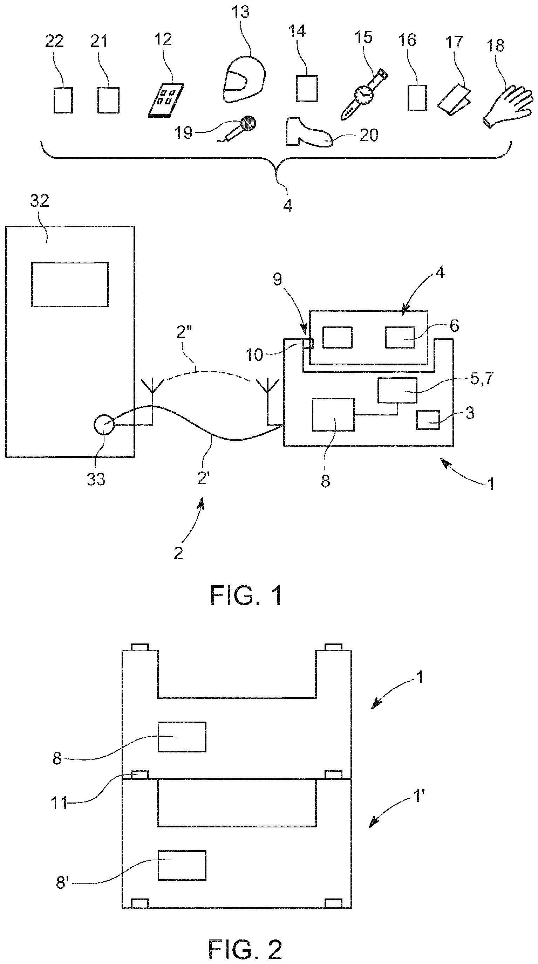

Fig. 1 zeigt ein Blockschaltbild eines mit einer Schweißstromquelle 32 verbindbaren Kommunikationsmoduls 1 zur Kommunikation mit verschiedenen Schweißkomponenten 4 eines Schweißsystems. Die Verbindung 2 zwischen Kommunikationsmodul 1 und Schweißstromquelle 32 kann durch eine Kabelverbindung 2' und bzw. oder eine drahtlose Verbindung 2" gebildet werden, wobei im Falle der letzteren Methode natürlich die entsprechenden Sender/Empfänger-Einheiten für die drahtlose Verbindung 2" im Kommunikationsmodul 1 und der Schweißstromquelle angeordnet sein müssen, wie durch die Antennensymbole angedeutet. Natürlich können auch mehrere Kommunikationsmodule 1 mit einer Schweißstromquelle 32 verbunden werden. Die Kabelverbindung 2' erfolgt vorzugsweise über eine vorhandene Standard-Datenschnittstelle 33, beispielsweise eine USB-Schnittstelle oder dgl., welche an der Schweißstromquelle 32 ohnedies vorhanden sein kann.

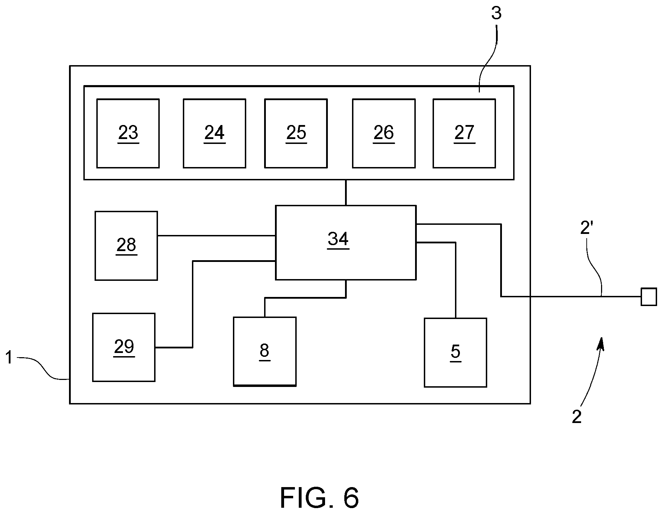

Das Kommunikationsmodul 1 weist eine Sende-/Empfangseinheit 3 zur drahtlosen Verbindung mit einer Schweißkomponente 4 auf, um eine Kommunikation mit der jeweiligen Schweißkomponente 4 zu ermöglichen. Die Kommunikationsmodul 1 leitet dann über die Verbindung 2 die entsprechenden Signale oder Informationen zur Schweißstromquelle 32 weiter bzw. von der Schweißstromquelle 32 zur Schweißkomponente 4. Die Sende-/Empfangseinheit 3 kann durch eine Bluetooth-Sende-/Empfangseinheit 23, eine NFC (Near Field Communication)-Sende-/Empfangseinheit 24, eine optische Sende-/ Empfangseinheit 25, eine akustische Sende-/Empfangseinheit 26 und bzw. oder eine Hochfrequenz-Sende-/Empfangseinheit 27 gebildet sein (siehe Fig. 6).

Weiters verfügt das Kommunikationsmodul 1 über eine Vorrichtung 5 zur kontaktlosen Ladung eines wiederaufladbaren Energiespeichers 6 der Schweißkomponente 4, insbesondere eine induktive Ladevorrichtung 7.

Im Kommunikationsmodul 1 ist vorzugsweise ein Energiespeicher 8, beispielsweise Akkumulator, angeordnet, um den Betrieb des Kommunikationsmoduls 1 und die Ladung eines wiederaufladbaren Energiespeichers 6 in einer Schweißkomponente 4 auch dann sicherstellen zu können, wenn das Kommunikationsmodul 1 nicht mit der Schweißstromquelle 32 verbunden ist oder das Kommunikationsmodul 1 zwar mit der Schweißstromquelle 32 verbunden ist, aber die Schweißstromquelle 32 vom Versorgungsnetz (nicht dargestellt) getrennt ist.

Im Kommunikationsmodul 1 ist vorzugsweise eine Aufnahme 9 zur mechanischen Kopplung mit der Schweißkomponente 4 vorgesehen ist. Die Aufnahme 9 kann beispielsweise als Art Ladeschale in Form der Schweißkomponente 4 oder eines Teils der Schweißkomponente 4 ausgebildet sein. Bevorzugt weist die Aufnahme 9 ein Verriegelungselement 10 zur Verriegelung der Schweißkomponente 4 in der Aufnahme 9 des Kommunikationsmoduls 1 auf.

Wie in Fig. 1 angedeutet, können die Schweißkomponenten 4 beispielsweise durch einen Fernregler 12, einen Schweißhelm 13, ein Head-Up-Display 14, eine Smartwatch 15, ein Smartphone 16, einen Fußfernsteller 17, einen Handschuh 18, ein Mikrophon 19 für eine Sprachsteuerung, einen Schuh 20, einen insbesondere smarten Sensor 21 und bzw. oder einen Aktor 22 gebildet sein.

Das erfindungsgemäße Kommunikationsmodul 1 stellt neben der Kommunikation zwischen Schweißstromquelle 32 und Schweißkomponente 4 auch die kontaktlose Ladung eines wiederaufladbaren Energiespeichers 6 in der Schweißkomponente sicher.

Fig. 2 zeigt ein Blockschaltbild zweier miteinander verbundener Kommunikationsmodule 1. Zu diesem Zweck befindet sich im Kommunikationsmodul 1 eine Schnittstelle 11 zur Verbindung mit der Schnittstelle 11 eines weiteren Kommunikationsmoduls 1'. Dadurch können beispielsweise mehrere Energiespeicher 8 mehrerer Kommunikationsmodule 1, 1' in Serie oder parallel zusammengeschaltet werden, um mehr Spannung oder Leistung für das Laden der wiederaufladbaren Energiespeichern 6 der Schweißkomponente 4 erzielen zu können.

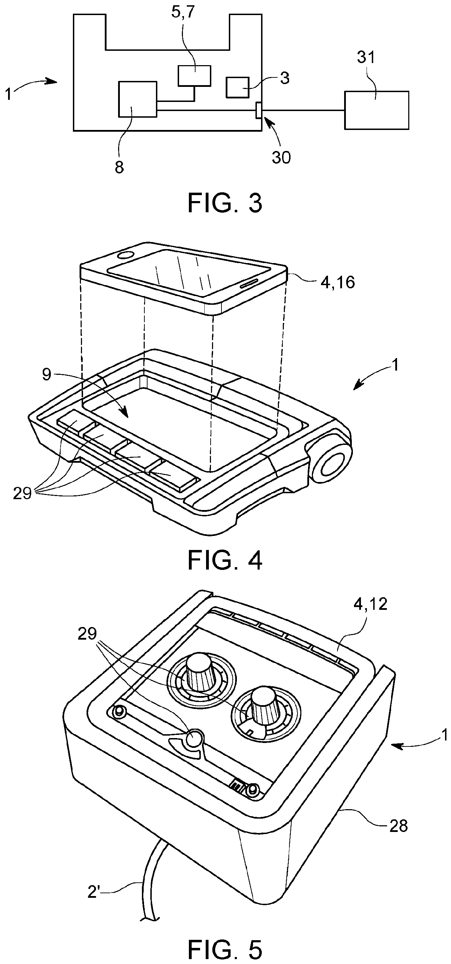

In Fig. 3 ist ein Blockschaltbild einer weiteren Ausführungsform eines Kommunikationsmoduls 1 für eine Schweißstromquelle 32 dargestellt. Alternativ oder zusätzlich zu einer in Fig. 2 beschriebenen Schnittstelle 11 kann auch eine Steckverbindung 30 am Kommunikationsmodul 1 angeordnet sein zur Verbindung mit einem externen Energiespeicher 31. Auf diese Weise kann die elektrische Energie, welche ein Kommunikationsmodul 1 durch den integrierten Energiespeicher 8 zur Verfügung stellt, erhöht werden.

Fig. 4 zeigt eine schematische Ansicht auf eine Ausführungsform eines Kommunikationsmoduls 1 für eine Schweißstromquelle 32. Am Kommunikationsmodul 1 sind Bedienelemente 29 vorgesehen, über welche verschiedene Einstellungen durch einen Benutzer vorgenommen werden können. Im Kommunikationsmodul 1 befindet sich eine Aufnahme 9 in Form einer Ladeschale zur mechanischen Kopplung mit einer Schweißkomponente 4, hier in Form eines Smartphones 16.

Die Ausführungsform eines Kommunikationsmoduls 1 gemäß Fig. 5 zeigt eine Aufnahme 9 am Kommunikationsmodul 1 für eine Schweißkomponente 4 in Form eines Fernreglers 12. Am Kommunikationsmodul 1 ist weiters eine Anzeige 28 und sind verschiedene Bedienelemente 29 vorgesehen, über welche verschiedene Einstellungen durch einen Benutzer vorgenommen werden können. Über die Kabelverbindung 2' erfolgt die Verbindung zwischen Kommunikationsmodul und Schweißstromquelle 32 (nicht dargestellt).

Fig. 6 zeigt schließlich ein Blockschaltbild eines Kommunikationsmoduls 1 der gegenständlichen Art. Wie bereits oben anhand von Fig. 1 erwähnt, dient die Sende-/Empfangseinheit 3 des Kommunikationsmoduls 1 zur drahtlosen Kommunikation mit der jeweiligen Schweißkomponente 4. Die Kommunikationsmodul 1 leitet über die Verbindung 2 die entsprechenden Signale oder Informationen zur Schweißstromquelle 32 weiter bzw. von der Schweißstromquelle 32 zur Schweißkomponente 4. Die Sende-/Empfangseinheit 3 kann durch eine Bluetooth-Sende-/Empfangseinheit 23, eine NFC (Near Field Communication)-Sende-/Empfangseinheit 24, eine optische Sende-/Empfangseinheit 25, eine akustische Sende-/Empfangseinheit 26 und bzw. oder eine Hochfrequenz-Sende-/Empfangseinheit (27) gebildet sein. Im Kommunikationsmodul 1 kann eine Anzeige 28 und können Bedienelemente 29 vorgesehen sein. Die Verbindung 2 zur Schweißstromquelle 32 (nicht dargestellt) kann über eine Kabelverbindung 2' oder auch eine drahtlose Verbindung 2" (nicht dargestellt) erfolgen. Ein Mikroprozessor 34 oder eine ähnliche Steuerungseinrichtung sorgt für das Funktionieren des Kommunikationsmoduls 1 und die entsprechenden Abläufe.

## Patentansprüche

1. Kommunikationsmodul (1) für eine Schweißstromquelle (30) mit einer Verbindung (2) zur Schweißstromquelle (32) und einer Sende-/Empfangseinheit (3) zur drahtlosen Verbindung mit einer Schweißkomponente (4), **dadurch gekennzeichnet, dass** eine Vorrichtung (5) zur kontaktlosen Ladung eines wiederaufladbaren Energiespeichers (6) der Schweißkomponente (4) vorgesehen ist.

2. Kommunikationsmodul (1) nach Anspruch 1, **dadurch gekennzeichnet, dass** die Vorrichtung (5) zur kontaktlosen Ladung des wiederaufladbaren Energiespeichers (6) der Schweißkomponente (4) durch eine induktive Ladevorrichtung (7) gebildet ist.

3. Kommunikationsmodul (1) nach Anspruch 1 oder 2, **dadurch gekennzeichnet, dass** ein mit der Vorrichtung (5) zur kontaktlosen Ladung des wiederaufladbaren Energiespeichers (6) der Schweißkomponente (4) verbundener Energiespeicher (8) vorgesehen ist.

4. Kommunikationsmodul (1) nach einem der Ansprüche 1 bis 3, **dadurch gekennzeichnet, dass** eine Aufnahme (9) zur mechanischen Kopplung mit der Schweißkomponente (4) vorgesehen ist.

5. Kommunikationsmodul (1) nach Anspruch 4, **dadurch gekennzeichnet, dass** die Aufnahme (9) ein Verriegelungselement (10) zur Verriegelung der Schweißkomponente (4) aufweist.

6. Kommunikationsmodul (1) nach einem der Ansprüche 1 bis 5, **dadurch gekennzeichnet, dass** eine Schnittstelle (11) zur Verbindung mit der Schnittstelle (11') eines weiteren Kommunikationsmoduls (1') vorgesehen ist.

7. Kommunikationsmodul (1) nach Anspruch 6, **dadurch gekennzeichnet, dass** die Schnittstelle (11) mit dem Energiespeicher (8) verbunden ist.

8. Kommunikationsmodul (1) nach einem der Ansprüche 1 bis 7, **dadurch gekennzeichnet, dass** eine Steckverbindung (30) zur Verbindung mit einem externen Energiespeicher (31) vorgesehen ist.

9. Kommunikationsmodul (1) nach einem der Ansprüche 1 bis 8, **dadurch gekennzeichnet, dass** die Schweißkomponente (4) durch einen Fernregler (12), einen Schweißhelm (13), ein Head-Up-Display (14), eine Smartwatch (15), ein Smartphone (16), einen Fußfernsteller (17), einen Handschuh (18), ein Mikrophon (19), einen Schuh (20), einen Sensor (21) und bzw. oder einen Aktor (22) gebildet ist.

10. Kommunikationsmodul (1) nach einem der Ansprüche 1 bis 9, **dadurch gekennzeichnet, dass** die Verbindung (2) zur Schweißstromquelle (32) durch eine Kabelverbindung (2'), insbesondere eine Standard-Datenschnittstelle (33) gebildet ist.

11. Kommunikationsmodul (1) nach einem der Ansprüche 1 bis 10, **dadurch gekennzeichnet, dass** die Verbindung (2) zur Schweißstromquelle (32) durch eine drahtlose Verbindung (2") gebildet ist.

12. Kommunikationsmodul (1) nach einem der Ansprüche 1 bis 11, **dadurch gekennzeichnet, dass** die Sende-/Empfangseinheit (3) durch eine Bluetooth-Sende-/Empfangseinheit (23), eine NFC (Near Field Communication)-Sende-/Empfangseinheit (24), eine optische Sende-/Empfangseinheit (25), eine akustische Sende-/Empfangseinheit (26) und bzw. oder eine Hochfrequenz-Sende-/Empfangseinheit (27) gebildet ist.

13. Kommunikationsmodul (1) nach einem der Ansprüche 1 bis 12, **dadurch gekennzeichnet, dass** eine Anzeige (28) vorgesehen ist.

14. Kommunikationsmodul (1) nach einem der Ansprüche 1 bis 13, **dadurch gekennzeichnet, dass** Bedienelemente (29) vorgesehen sind.
